# EUROPEAN PATENT SPECIFICATION

(11) **EP 4 599 016 B1**
(45) Date of publication and mention of the grant of the patent: **23.09.2026**
(21) Application number: 23785801.4
(22) Date of filing: 06.10.2023
(51) Int. Cl.: C09K 5/04

(54) **REFRIGERANT COMPOSITION FOR REPLACING R-23**
KÜHLMITTELZUSAMMENSETZUNG ZUM ERSETZEN VON R-23
COMPOSITION DE RÉFRIGÉRANT POUR REMPLACER R-23

(30) Priority: 07.10.2022 EP 22382945
(43) Date of publication of application: 13.08.2025
(73) Proprietor: Gases Research Innovation and Technology, S.L., 08279 Avinyó (ES)
(72) Inventor: MANZANO MATO, Víctor, 08018 Barcelona (ES); FERRER ENRÍQUEZ, Nabí, The Woodlands, Texas 77380 (US); GUTIÉRREZ ORTEGA, Angel Eduardo, 08005 Barcelona (ES); MUNTADAS CAMPRUBÍ, Sergi, 08500 Vic (ES)
(74) Representative: ZBM Patents - Zea, Barlocci & Markvardsen
(86) International application number: PCT/EP2023/077717
(87) International publication number: WO 2024/074683

(56) References cited:
- DE-A1- 102019 119 194
- US-A1- 2020 231 855
- DI NICOLA G ET AL: "Blends of carbon dioxide and HFCs as working fluids for the low-temperature circuit in cascade refrigerating systems", INTERNATIONAL JOURNAL OF REFRIGERATION, ELSEVIER, AMSTERDAM, NL, vol. 28, no. 2, 1 March 2005 (2005-03-01), pages 130 - 140, XP027765598, ISSN: 0140-7007, [retrieved on 20050301]

## Description

This application claims the benefit of European Patent Application EP22382945.8, filed on October 7, 2022.

### Technical Field

The present invention relates to the field of refrigerant compositions. Particularly, it relates to an environmentally friendly refrigerant composition containing a non-ozone-depleting mixture of refrigerant gas combination for the replacement of refrigerant R-23. The invention also relates to a process for cooling articles, and to a refrigerant system containing the said composition.

### Background Art

It is well-known that chlorofluorocarbons (CFCs) contribute to depletion of the earth's protective ozone layer. Due to the environmental problems caused by CFCs, these substances were replaced in the late 80s and early 90s by less harmful refrigerant agents, including hydrochlorofluorocarbons (HCFCs) such as chlorodifluoromethane (R-22) and hydrofluorocarbons (HFC) such as trifluoromethane (R-23).

R-23 was the refrigerant used most often until recently in ultra-low temperature refrigeration systems operating with temperatures of up to about -80 °C. Unfortunately, R-23 has a dramatic impact on the greenhouse effect since it has a Global Warming Potential (GWP) of 14800. For this reason, the European Commission has banned the use of R-23 for some specific applications.

Currently there are few non-flammable alternatives to R-23 that allow obtaining very low temperatures. Refrigerant gases, such as R-404A, which is a ternary mixture of 1,1,1,2,2-pentafluoroethane (R-125), 1,1,1,2-tetrafluoroethane (R-134a), and 1,1,1-trifluoroethane (R143a) at a weight ratio 44/4/52, can be used. However, the use of R-404A involves working under vacuum conditions, which results in low energy efficiency and the risk of introducing non-condensable gases into the refrigerant circuit in the event of leakage, which increases the power consumption.

As an alternative for the replacement of R-23, an interest in CO₂, commonly known as R-744 when used as a refrigerant, has arisen mainly because it is a natural gas and does not damage the ozone layer (Ozone Depletion Potential ODP = 0). Moreover, it has a low impact on global warming (Global Warming Potential GWP = 1), it does not show toxicity, it is not flammable, and shows high volumetric capacity and high heat transfer.

However, the use of CO₂ has some important drawbacks. On the one hand, it has safety issues arising from the use of high pressure. Further, at a pressure lower than the pressure of its triple point (517 kPa, -56.60 °C), it undergoes inverse sublimation, i.e., it turns into dry ice and remains in that state inside the system. This means that CO₂ as a pure substance can only be used at evaporation temperatures higher than -50 °C. Additionally, CO₂ as a refrigerant does not fit to any existing refrigerant system. Rather, special equipment must be developed that is able to withstand high pressures. This is because CO₂ cannot condense above 31 °C.

The use of mixtures of CO₂ and hydrocarbons, such as ethane and ethene, does not solve the above problems. While it is true that the addition of hydrocarbons to CO₂ allows lowering the temperature of solidification, and therefore the operating evaporation temperature, the proportion of the added hydrocarbons must be so high that the mixture becomes then easily flammable.

Therefore, from what is known in the art it is derived that there is still the need of providing a non-inflammable, non-toxic, and environmentally friendly refrigerant compositions for the replacement of R-23 having a high coefficient of performance (COP) and being oil compatible.

Refrigerant mixtures of R-125, R-41 and carbon dioxide are known from US2020/231855.

### Summary of Invention

The inventors have found that when carbon dioxide is combined with 1,1,1,2,2-pentafluoroethane (R-125), and fluoromethane (R-41) in specific amounts, a refrigerant composition is obtained which is environmentally friendly since is not harmful to the ozone layer and has a low impact on global warming (GWP lower than 1500).

The compositions of the invention have a number of advantages. First, they are non-flammable and non-toxic, since they have an occupational exposure limit value (OELV) i.e, a maximum permissible concentration in the to which workers may be exposed for an 8 hour or a 15-minute reference period, which is higher than 400 ppm according to HSA's 2016 Code of Practice for the Chemical Agents Regulations. Therefore, the compositions of the present invention can be classified as safety refrigerant class A1 by the American Society of Heating, Refrigerating and Air-Conditioning Engineers (ASHRAE) standard 34/15, Appendix B.

Further, the compositions of the invention are capable to evaporate at about -80 °C with positive pressure suction, thus they have a refrigeration capacity that is similar to R-23. The energy efficiency of these compositions is also similar to R-23. Additionally, they contain a large proportion (from 70 to 85 wt%) of a readily available natural gas (carbon dioxide) and they do not undergo inverse sublimation.

A further advantage is that the compositions of the invention are also compatible with oil lubricants, such as mineral oil, polyol ester (POE), polyalphaolefin, commonly used in the existing refrigerant systems. Thus, while being miscible with the circulating oil, the refrigerant compositions do not compromise the oil lubrication effect in the refrigerant system. Besides, the compositions of the invention have a low glide temperature. These properties make possible the incorporation of the compositions of the invention into existing refrigerant systems without the need of performing any structural modifications, which is which is very advantageous from a technical and commercial point of view.

For all the above reasons, the compositions of the invention are ideal candidates to replace R-23 because they are efficient, safe, secure, non-inflammable, and environmentally friendly. Furthermore, the compositions of the invention are particularly useful for the retrofitting of R-23 refrigerant systems because their use does not involve a change of the lubricant and/or adaptations of the existing equipment (such as compressors).

Thus, the first aspect of the invention relates to a composition comprising:
a) from 8 to 30% by weight of 1,1,1,2,2-pentafluoroethane (R-125),
b) fluoromethane (R-41) in an amount equal to or lower than about 10% by weight, and
c) from 70 to 85% by weight of carbon dioxide,
being the sum of all the components of the composition of 100% by weight.

A second aspect of the invention relates to the use of the composition as defined in the first aspect of the invention as a refrigerant.

A third aspect of the invention relates to a refrigerant system comprising the composition of the first aspect of the invention.

A fourth aspect of the invention relates to refrigeration process for decreasing the temperature of an article using the system as defined in the third aspect of the invention.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

The term "about" or "around" as used herein refers to a range of values ± 10% of a specified value. For example, the expression "about 10" or "around 10" includes ± 10% of 10, i.e. from 9 to 11.

For the purposes of the present invention, any ranges given include both the lower and the upper endpoints of the range. Ranges given, such as weight, temperatures, times, weights, and the like, should be considered approximate, unless specifically stated.

The terms "percentage (%) by weight", "weight/weight %" and "w/w%" have the same meaning and are used interchangeably. They refer to the percentage of each ingredient of the composition in relation to the total weight of the composition.

The term "room temperature" refers to a temperature of the environment, without heating or cooling, and it is generally comprised from 20 °C to 25 °C.

For the purposes of the invention, the term "refrigerant" refers to a fluid used in a refrigeration system to remove heat.

The terms "COP" or "coefficient of performance" have the same meaning and are used interchangeably. The COP of a cooling pump is a ratio of cooling provided to electrical energy consumed at a specific temperature. Higher values of COPs equate to lower operating costs. Values of COPs of different refrigerants are determined in the heat exchanger when the refrigerant in the compressor inlet is in its totality in gas form, the process of compression is an isentropic process, and the process of expansion in the expansion valve is an isenthalpic process. The value of COP is calculated by the ratio of the heat removed from the cold reservoir to input work by the following equation: $COP = Q / E$ wherein Q is the heat removed from the cold reservoir, and E is the work consumed by the cooling pump. The Q value is calculated by the following equation: $Q = {W}_{cs} ⋅ {Cp}_{CS} ⋅ \left({T}_{f}-{T}_{i}\right)$ wherein W_{cs} is the flow mass metter of secondary fluid; Cp_{cs} is the specific heat of the secondary fluid at a constant temperature and constant pressure; T_{f} is the outlet temperature in the secondary fluid heat exchanger; and Tᵢ is the inlet temperature in the secondary fluid heat exchanger. And the E value is the electrical consumption that is calculated by measuring it in each phase by an electrometer installed in the system.

The term "glide" or "glide temperature" is used herein to describe the temperature change during the evaporation and condensation processes. In particular, it can be defined as the temperature difference between the bubble point and the dew point at a specified constant pressure. The "glide" is a property of a refrigerant that is independent of equipment and operating conditions.

The terms "1,1,1,2,2-pentafluoroethane" and "R-125", have the same meaning and are used interchangeably. R-125 has the molecular formula CF₃CF₂H (CAS number 354-33-6).

The terms "fluoromethane" and "R-41", have the same meaning and are used interchangeably. R-41 has the molecular formula CH₃F (CAS number 593-53-3).

The terms "hydrocarbon" and "non-halogenated hydrocarbon" have the same meaning and are used interchangeably. They refer to organic compounds which contain only carbon and hydrogen and contain the number of carbon atoms specified in the description or claims. Hydrocarbons of particular interest in the present invention include alkanes and alkenes.

For the purposes of the invention, the term "alkane" refers to a saturated linear or branched hydrocarbon which contains the number of carbon atoms specified in the description or claims. Non-limiting examples of alkanes include ethane (R-170), propane (R-290), n-butane (R-600), isobutane (R-600a), 3-methylpentane, n-pentane (R-601) or isopentane (R-601a).

The term "alkene" refers to an unsaturated linear or branched hydrocarbon that contains at least one double bond and has the number of carbon atoms specified in the description or claims. Non-limiting examples of alkanes include ethylene (ethene, R-1150), propylene (propene, R-1270), n-butene, isobutene, 1-pentene, cis-2-pentene, and trans-2-pentene and mixtures thereof.

As it is mentioned above, the first aspect of the invention is a composition comprising:
a) from 8 to 30% by weight of 1,1,1,2,2-pentafluoroethane (R-125),
b) fluoromethane (R-41) in an amount equal to or lower than about 10% by weight, and
c) from 70 to 85% by weight of carbon dioxide,
being the sum of all the components of the composition of 100% by weight.

Thus, the composition of the invention comprises from 8 to 30% by weight of 1,1,1,2,2-pentafluoroethane (R-125) with respect to the total weight of the composition. In one embodiment, optionally in combination with one or more features of the various embodiments described above or below throughout all the description, the composition comprises from 9 to 28%, more particularly from 10 to 25% by weight of R-125. In another embodiment, optionally in combination with one or more features of the various embodiments described above or below throughout all the description, the composition comprises about 8%, about 8.5%, about 9%, about 9.5%, about 10%, about 10.5%, about 11%, about 11.5%, about 12%, about 12.5%, about 13%, about 13.5%, about 14%, about 14.5%, about 15%, about 15.5%, about 16%, about 16.5%, about 17%, about 17.5%, about 18%, about 18.5%, about 19%, about 19.5%, about 20%, about 20.5%, about 21%, about 21.5%, about 22%, about 22.5%, about 23%, about 23.5%, about 24%, about 24.5%, about 25%, about 25.5%, about 26%, about 26.5%, about 27%, about 27.5%, about 28%, about 28.5%, about 29%, about 29.5%, or about 30%, by weight of R-125 with respect to the total weight of the composition.

In another embodiment, optionally in combination with one or more features of the various embodiments described above or below throughout all the description, the composition comprises from 12 to 20%, more particularly from 14 to 18%, and even more particularly about 16 or 17% by weight of R-125.

The composition of the invention comprises fluoromethane (R-41) in an amount equal to or lower than about 10%, more particularly equal to or lower than about 7%, by weight of with respect to the total weight of the composition. In one embodiment, optionally in combination with one or more features of the various embodiments described above or below throughout all the description, the composition comprises from 0.2 to 10%, more particularly from 0.5 to 10%, even more particularly from 0.5 to 7%, and even more particularly from 0.5 to 6% by weight of R-41. In another embodiment, optionally in combination with one or more features of the various embodiments described above or below throughout all the description, the composition comprises about comprises about 0.2%, about 0.3%, about 0.4%, about 0.5%, about 0.6%, about 0.7%, about 0.8%, about 0.9%, about 1%, about 1.5%, about 2%, about 2.5%, about 3%, about 3.5%, about 4%, about 4.5%, about 5%, about 5.4%, about 5.5%. about 6%, about 6.5%, about 7%, about 7.5%, about 8%, about 8.5%, about 9%, about 9.5%, or about 10% by weight of R-41 with respect to the total weight of the composition.

In another embodiment, optionally in combination with one or more features of the various embodiments described above or below throughout all the description, the composition comprises from 2 to 9%, more particularly from 4 to 8%, and even more particularly about 5.4 or about 7% by weight of R-41.

In another embodiment, optionally in combination with one or more features of the various embodiments described above or below throughout all the description, the composition comprises from 0.5 to 6%, more particularly from 2 to 6%, and even more particularly from 4 to 6% by weight of R-41.

The composition of the invention comprises from 70 to 85% by weight of carbon dioxide with respect to the total weight of the composition. In one embodiment, optionally in combination with one or more features of the various embodiments described above or below throughout all the description, the composition comprises from 72 to 84%, more particularly from 73 to 83% by weight of carbon dioxide. In another embodiment, optionally in combination with one or more features of the various embodiments described above or below throughout all the description, the composition comprises about comprises about 70%, about 70.5%, about 71%, about 71.5%, about 72%, about 72.5%, about 73%, about 73.5%, about 74%, about 74.5%, about 75%, about 75.5%, about 76%, about 76.5%, about 77%, about 77.5%, about 78%, about 78.5%. about 79%, about 79.5%, about 80%, about 80.5%, about 81%, about 81.5%, about 82%, about 82.5%, about 83%, about 83.5%, about 84%, about 84.5%, or about 85% by weight of carbon dioxide with respect to the total weight of the composition.

In another embodiment, optionally in combination with one or more features of the various embodiments described above or below throughout all the description, the composition comprises from 74 to 82%, more particularly from 75 to 80%, even more particularly from 75 to 79%, and even more particularly about 77% by weight of carbon dioxide.

According to one embodiment, optionally in combination with one or more features of the various embodiments described above or below throughout all the description, the refrigerant composition of the invention comprises or consists of:
a) from 9 to 28% by weight of 1,1,1,2,2-pentafluoroethane (R-125),
b) fluoromethane (R-41) in an amount equal to or lower than about 7% by weight, and
c) from 72 to 84% by weight of carbon dioxide,
being the sum of all the components of the composition of 100% by weight.

According to another embodiment, optionally in combination with one or more features of the various embodiments described above or below throughout all the description, the refrigerant composition of the invention comprises or consists of:
a) from 9 to 28% by weight of 1,1,1,2,2-pentafluoroethane (R-125),
b) from 0.5 to 10% by weight of fluoromethane (R-41), and
c) from 72 to 84% by weight of carbon dioxide,
being the sum of all the components of the composition of 100% by weight.

According to one embodiment, optionally in combination with one or more features of the various embodiments described above or below throughout all the description, the refrigerant composition of the invention comprises or consists of:
a) from 9 to 28% by weight of 1,1,1,2,2-pentafluoroethane (R-125),
b) fluoromethane (R-41) in an amount equal to or lower than about 6% by weight, and
c) from 75 to 84% by weight of carbon dioxide,
being the sum of all the components of the composition of 100% by weight.

According to another embodiment, optionally in combination with one or more features of the various embodiments described above or below throughout all the description, the refrigerant composition of the invention comprises or consists of:
a) from 10 to 25% by weight of 1,1,1,2,2-pentafluoroethane (R-125),
b) from 0.5 to 7% by weight of fluoromethane (R-41), and
c) from 73 to 83% by weight of carbon dioxide,
being the sum of all the components of the composition of 100% by weight.

According to another embodiment, optionally in combination with one or more features of the various embodiments described above or below throughout all the description, the refrigerant composition of the invention comprises or consists of:
a) from 10 to 25% by weight of 1,1,1,2,2-pentafluoroethane (R-125),
b) from 0.5 to 6% by weight of fluoromethane (R-41), and
c) from 75 to 80% by weight of carbon dioxide,
being the sum of all the components of the composition of 100% by weight.

The composition may comprise one or more additional refrigeration gases, particularly non-halogenated (C₂-C₆)hydrocarbons such as alkanes and alkenes. Thus, in one embodiment, optionally in combination with one or more features of the various embodiments described above or below throughout all the description, the refrigerant composition of the invention further comprises one or more additional refrigeration gases, particularly (C₂-C₆)alkanes, and/or (C₂-C₆)alkenes, more particularly in an amount from 0.1 to 2% by weight with respect to the total weight of the composition. In one particular embodiment, optionally in combination with one or more features of the various embodiments described above or below throughout all the description, the composition comprises from 0.2 to 1.8%, more particularly from 0.5 to 1.5% by weight of the one or more additional refrigeration gases, particularly (C₂-C₆)alkanes, and/or (C₂-C₆)alkenes. In another embodiment, optionally in combination with one or more features of the various embodiments described above or below throughout all the description, the composition further comprises about 0.1%, about 0.2%, about 0.3%, about 0.4%, about 0.5%, about 0.6%, about 0.7%, about 0.8%, about 0.9%, about 1%, about 1.1%, about 1.2%, about 1.3%, about 1.4%, about 1.5%, about 1.6%, about 1.7%, about 1.8%, about 1.9%, about 2% by weight of one or more additional refrigeration gases with respect to the total weight of the composition, particularly (C₂-C₆)alkanes, and/or (C₂-C₆)alkenes.

According to one embodiment, optionally in combination with one or more features of the various embodiments described above or below throughout all the description, the one or more additional refrigeration gases comprise one or more (C₂-C₆)alkanes, particularly in an amount from 0.1 to 2%, from 0.2 to 1.8% or from 0.5 to 1.5% by weight with respect to the total weight of the composition, particularly wherein the (C₂-C₆)alkanes are selected from the group consisting of ethane, propane, n-butane, isobutane, 3-methylpentane, n-pentane or isopentane.

According to another embodiment, optionally in combination with one or more features of the various embodiments described above or below throughout all the description, the one or more additional refrigeration gases comprise one or more (C₂-C₆)alkenes, particularly in an amount from 0.1 to 2%, from 0.2 to 1.8% or from 0.5 to 1.5% by weight with respect to the total weight of the composition, particularly wherein the (C₂-C₆)alkenes selected from the group consisting of ethylene, propylene, n-butene, isobutene, 1-pentene, cis-2-pentene, and trans-2-pentene and mixtures thereof, even more particularly ethylene.

According to another embodiment, optionally in combination with one or more features of the various embodiments described above or below throughout all the description, the one or more additional refrigeration gases comprise one or more (C₂-C₆)alkanes and one or more (C₂-C₆)alkenes, particularly being the sum of the (C₂-C₆)alkanes and (C₂-C₆)alkenes from 0.1 to 2%, from 0.2 to 1.8% or from 0.5 to 1.5% by weight with respect to the total weight of the composition, particularly wherein the (C₂-C₆)alkanes are selected from the group consisting of ethane, propane, n-butane, isobutane, 3-methylpentane, n-pentane or isopentane and the (C₂-C₆)alkenes selected from the group consisting of ethylene, propylene, n-butene, isobutene, 1-pentene, cis-2-pentene, and trans-2-pentene and mixtures thereof, even more particularly ethylene.

In one embodiment, optionally in combination with one or more features of the various embodiments described above or below throughout all the description, the refrigerant composition of the invention further comprises ethylene, more particularly in an amount from 0.1 to 2% by weight with respect to the total weight of the composition. In one particular embodiment, optionally in combination with one or more features of the various embodiments described above or below throughout all the description, the composition comprises from 0.2 to 1.5%, more particularly from 0.3 to 1.2%, and even more particularly from 0.4 to 0.8% by weight of ethylene. In another embodiment, optionally in combination with one or more features of the various embodiments described above or below throughout all the description, the composition further comprises about 0.1%, about 0.2%, about 0.3%, about 0.4%, about 0.5%, about 0.6%, about 0.7%, about 0.8%, about 0.9%, about 1%, about 1.1%, about 1.2%, about 1.3%, about 1.4%, about 1.5%, about 1.6%, about 1.7%, about 1.8%, about 1.9%, about 2% by weight of ethylene.

In one embodiment, optionally in combination with one or more features of the various embodiments described above or below throughout all the description, the refrigerant composition of the invention comprises or consists of:
a) from 9 to 28% by weight of 1,1,1,2,2-pentafluoroethane (R-125),
b) fluoromethane (R-41) in an amount equal to or lower than about 7% by weight, and
c) from 72 to 84% by weight of carbon dioxide,
d) from 0.1 to 2% by weight of an (C₂-C₆)alkane or an (C₂-C₆)alkene, more particularly of a (C₂-C₆)alkene, even more particularly of ethylene,
being the sum of all the components of the composition of 100% by weight.

In another embodiment, optionally in combination with one or more features of the various embodiments described above or below throughout all the description, the refrigerant composition of the invention comprises or consists of:
a) from 9 to 28% by weight of 1,1,1,2,2-pentafluoroethane (R-125),
b) from 0.5 to 10% by weight of fluoromethane (R-41), and
c) from 72 to 84% by weight of carbon dioxide,
d) from 0.2 to 1.8% by weight of an (C₂-C₆)alkane or an (C₂-C₆)alkene, more particularly of a (C₂-C₆)alkene, even more particularly of ethylene,
being the sum of all the components of the composition of 100% by weight.

In another embodiment, optionally in combination with one or more features of the various embodiments described above or below throughout all the description, the refrigerant composition of the invention comprises or consists of:
a) from 10 to 25% by weight of 1,1,1,2,2-pentafluoroethane (R-125),
b) from 0.5 to 10% by weight of fluoromethane (R-41), and
c) from 73 to 83% by weight of carbon dioxide,
d) from 0.5 to 1.5% by weight of an (C₂-C₆)alkane or an (C₂-C₆)alkene, more particularly of a (C₂-C₆)alkene, even more particularly of ethylene,
being the sum of all the components of the composition of 100% by weight.

In another embodiment, optionally in combination with one or more features of the various embodiments described above or below throughout all the description, the refrigerant composition of the invention consists of:
a) about 10% by weight of 1,1,1,2,2-pentafluoroethane (R-125),
b) about 7% by weight of fluoromethane (R-41), and
c) about 83% by weight of carbon dioxide.

In another embodiment, optionally in combination with one or more features of the various embodiments described above or below throughout all the description, the refrigerant composition of the invention consists of:
a) about 11% by weight of 1,1,1,2,2-pentafluoroethane (R-125),
b) about 5.4% by weight of fluoromethane (R-41), and
c) about 83% by weight of carbon dioxide,
d) about 0.6% by weight of ethylene (R-1150).

In another embodiment, optionally in combination with one or more features of the various embodiments described above or below throughout all the description, the refrigerant composition of the invention consists of:
a) about 21% by weight of 1,1,1,2,2-pentafluoroethane (R-125),
b) about 5.4% by weight of fluoromethane (R-41), and
c) about 73% by weight of carbon dioxide,
d) about 0.6% by weight of ethylene (R-1150).

In another embodiment, optionally in combination with one or more features of the various embodiments described above or below throughout all the description, the refrigerant composition of the invention consists of:
a) about 17% by weight of 1,1,1,2,2-pentafluoroethane (R-125),
b) about 5.4% by weight of fluoromethane (R-41), and
c) about 77% by weight of carbon dioxide,
d) about 0.6% by weight of ethylene (R-1150).

In another embodiment, optionally in combination with one or more features of the various embodiments described above or below throughout all the description, the refrigerant composition of the invention consists of:
a) about 16% by weight of 1,1,1,2,2-pentafluoroethane (R-125),
b) about 7% by weight of fluoromethane (R-41), and
c) about 77% by weight of carbon dioxide.

In another embodiment, optionally in combination with one or more features of the various embodiments described above or below throughout all the description, the refrigerant composition of the invention consists of:
a) about 25% by weight of 1,1,1,2,2-pentafluoroethane (R-125),
b) about 0.5% by weight of fluoromethane (R-41), and
c) about 74% by weight of carbon dioxide,
d) about 0.5% by weight of ethylene (R-1150).

In another embodiment, optionally in combination with one or more features of the various embodiments described above or below throughout all the description, the refrigerant composition of the invention consists of:
a) about 20% by weight of 1,1,1,2,2-pentafluoroethane (R-125),
b) about 0.5% by weight of fluoromethane (R-41), and
c) about 79% by weight of carbon dioxide,
d) about 0.5% by weight of ethylene (R-1150).

In another embodiment, optionally in combination with one or more features of the various embodiments described above or below throughout all the description, the refrigerant composition of the invention consists of:
a) about 19% by weight of 1,1,1,2,2-pentafluoroethane (R-125),
b) about 7% by weight of fluoromethane (R-41), and
c) about 74% by weight of carbon dioxide.

As mentioned above, the compositions of the invention are capable to evaporate at about -80 °C with positive pressure suction. Thus, in one embodiment, optionally in combination with one or more features of the various embodiments described above or below throughout all the description, the refrigerant composition of the invention is capable of refrigerating equal to or lower than about a temperature of about -70 °C, more particularly -75 °C, even more particularly -80°C.

According to one embodiment, optionally in combination with one or more features of the various embodiments described above or below throughout all the description, the composition of the invention has a global warming potential (GWP) value equal to or lower than 1500 t_{eq} CO₂, more particularly equal to or lower than 1000 t_{eq} CO₂.

As mentioned above, the compositions of the invention are particularly suitable for replacing the R-23 refrigerant. According to one embodiment, optionally in combination with one or more features of the various embodiments described above or below throughout all the description, the composition of the invention has at least about 70%, more particularly at least about 80%, and even more particularly at least about 90%, of the COP value of R-23, which is about 4.29.

According to another embodiment, optionally in combination with one or more features of the various embodiments described above or below throughout all the description, the glide temperature of the compositions of the invention is equal to or lower than about 10 °C, more particularly equal to or lower than about 8 °C.

It also forms part of the invention a process for the preparation of the composition of the first aspect of the invention. Commonly, the combination of the ingredients of the composition is carried out in a pre-determined order according to the equilibrium pressure value of each one of them. The equilibrium pressure value may be determined by using the *REFPROP* software version 10.0 available by the National Institute of Standards (NIST) on June 4^{th}, 2018.

In particular, the ingredients of the composition of the invention may be mixed starting from the ingredient having the lowest equilibrium pressure value to the ingredient having the highest equilibrium pressure value. Taking this into account, a skilled person can easily determine the specific experimental process conditions to be used for the preparation of a specific composition of the invention. For example, for a composition comprising R-125, R-41, carbon dioxide, and ethylene, the order would be R-125, R-41, ethylene and finally CO₂.

The present invention also refers to a refrigerant system comprising the composition as defined in the first aspect of the invention. Appropriate systems for the present invention can be any system known in the state of the art for conducting a freezing process. The composition of the present invention is advantageous because allows providing a refrigerant system by the replacement of the previous containing refrigerant without the need of changing or adapting the existing equipment. In fact, it is only needed to exchange the existing refrigerant of the system by the refrigerant composition of the invention. Non-limiting examples of suitable freezing systems include, cold room, continuous or discontinuous cold tunnel, air conditioning, chiller, and liquid immersion freezing.

It also forms part of the invention a process for filling an empty refrigeration system with the refrigerant composition of the invention, or a process for replacing a refrigerant composition from a refrigeration system by the refrigerant composition of the invention. Thus, the invention also relates to a process for filling a refrigerant system which comprises:
a) if the refrigeration system comprises a refrigerant composition other than the refrigerant composition of the invention, removing the refrigeration composition from the refrigeration system;
b) optionally carrying out an inertization of the refrigeration system by circulating through the system one or more inert gases, and removing the inert gas from the inertized refrigeration system; and
c) filling the system with a composition of the present invention in liquid phase.

Step a) comprises removing the refrigeration composition from the refrigeration system if present. The removing of the refrigeration composition can be performed by any method known in the state of the art, typically by using a gas recovery machine.

Step b) comprises firstly, the inertization of the empty refrigeration system by circulating through the system one or more inert gases if required. The inertization can be performed by any method known in the state of the art such as the addition of the inert gas. Non-limiting examples of appropriate inert gases that may be used in this step include carbon dioxide, argon, and helium. In case the inertization is required, the process further comprises removing the inert gas from the inertized refrigeration system. The removal can be performed by any method known in the state of the art, typically by using a vacuum pump.

Step c) comprises filling the system with the composition of the present invention in liquid phase. Typically, this is performed by adding the composition in the amount which is specified by the refrigerant equipment to be filled. Usually this is done by weighing the mass of the container where the gas was contained.

The fourth aspect of the invention refers to a refrigeration process comprising decreasing the temperature of (i.e., cooling) an article using the system as defined in the third aspect of the invention. The refrigeration process of the invention may be performed by direct-contact or indirect-contact of the refrigerant composition with the product to be refrigerated/frozen. Indirect-contact processes involve cooling the surface that is in contact with the product to be refrigerated/frozen; or cooling the air/inert gas that is in the vicinity of the product to be refrigerated/frozen; or cooling the liquid in which the article or product to be refrigerated/freeze is immersed.

According to one embodiment, optionally in combination with one or more features of the various embodiments described above or below throughout all the description, the refrigeration process comprises going down the temperature of an article; particularly from room temperature to -80°C, using the system as defined in the third aspect of the invention. In comparison to the processes of the state of the art, the reduction of the temperature is carried out in a short period of time (minutes) involving a reduced energy consumption but with a high coefficient of performance, a high volumetric coefficient of thermal expansion and appropriate condensation pressure.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### Examples

### General considerations

The measurement of coefficient of performance (COP) was performed by using the simulation program Refprop v10, which allows calculating the pressures and enthalpies of the mixture at different temperature and pressure conditions. The measurement comprises firstly, the simulation of the thermodynamic cycle of the mixture, taken into account that the points of the cycle are:
- Evaporator outlet, set to -80°C and quality 1 (all gas).
- Compressor inlet, will have the same pressure as the previous point, with an overheating temperature of 5°C, therefore -75 °C.
- Compressor outlet, it will have the same pressure as the condensation (next point) and the same entropy as the compressor inlet.
- Condensation, set at -30 °C and quality 0 (all liquid).
- Expansion / Evaporator inlet, it will have the same pressure as the evaporator outlet and the same enthalpy as the condensation.

Once all the values were calculated, the Qevap (evaporation power) and the Qcomp (compression power) were calculated. The Qevap (in kW) was calculated as the product of the three following values: a) enthalpy difference between the evaporator inlet and the evaporator outlet (h in kJ/kg), b) the density of the mixture (at the compressor inlet point) and c) the compressor flow rate (in this case 1 L/s). The Qcomp (kW) was obtained using the enthalpy at the evaporator inlet and the enthalpy at the compressor outlet, using the same density and volumetric flow rate values of the compressor. The COP was obtained by dividing Qevap by Qcomp: $COP = \frac{Qevap}{Qcomp}$

For the comparison with R-23, the same procedure mentioned above was performed for calculating R-23's COP, and then the COP value of the tested mixture and the COP value of R-23 were compared. A gas mixture having a COP value of at least about 70% the COP value of R-23 is considered appropriate for being used as R-23 substituent.

The measurement of the GWP (t_{eq} CO₂) value of a mixture was performed by searching the values of the GWP of each component individually forming part of the mixture in the F-gas (Regulation of the European Parliament and the Conseil (UE) n° 517/2014 April 16th, 2014). Then, a weighted average is made between the GWP of each component and its composition by mass within the mixture. The resulting value was the GWP.

The determination of the flammability was performed following the ASHRAE standard 34/15 according to Appendix B.

### 1. Refrigerant compositions

Table 1 shows the qualitative and quantitative composition of the refrigerant compositions of Examples 1-6 of the present invention.

**Table 1**

| **Example N°** | **Components (%) w/w** | | | |
|---|---|---|---|---|
| | **R-125** | **R-41** | **Ethylene** | **CO₂** |
| **Example 1** | 10 | 7 | 0 | 83 |
| **Example 2** | 11 | 5.4 | 0.6 | 83 |
| **Example 3** | 21 | 5.4 | 0.6 | 73 |
| **Example 4** | 17 | 5.4 | 0.6 | 77 |
| **Example 5** | 16 | 7 | 0 | 77 |
| **Example 6** | 19 | 7 | 0 | 74 |

Table 2 shows the qualitative and quantitative composition of the comparative refrigerant compositions 1-6 falling outside the scope of the present invention, wherein at least one of the ingredients is present in an amount falling outside (above or below) the claimed range.

**Table 2**

| **Comparative Example N°** | **Components (%) w/w** | | | |
|---|---|---|---|---|
| | **R-125** | **R-41** | **Ethylene** | **CO₂** |
| **Comparative example 1** | 15 | 12 | 0 | 73 |
| **Comparative example 2** | 65 | 25 | 0 | 10 |
| **Comparative example 3** | 8 | 25 | 0 | 67 |
| **Comparative example 4** | 4 | 0 | 1,5 | 94.5 |
| **Comparative example 5** | 15.5 | 0 | 1,5 | 83 |
| **Comparative example 6** | 5 | 0 | 2 | 93 |

### Preparation process

The refrigerant compositions of the present invention of Ex. 1-6 and the comparative refrigerant compositions 1-6 disclosed in Tables 1 and 2, were prepared following the general process as defined herein below using the ingredients and the amounts specifically disclosed in Tables above.

### A. General reference process

### i) Bottle inertization

A 1L bottle was inertized by nitrogen sweep to remove all impurities/trace contaminants such as air. The volume of nitrogen circulated through the bottle was at least 2 times the volume of the container. Then, the nitrogen contained inside the bottle was removed by vacuum until achieving at least an absolute pressure of 500 Pa. For the composition of Example 4, a 1L bottle can be filled with a maximum amount of 0.52kg of the mixture of components. Due to this fact, the weight of each ingredient (component) in the prepared refrigerant mixture of Ex. 4 was the result of multiplying the weight % of the ingredient by 0.52 kg/L as detailed herein below.

### ii) Bottle filling

The ingredients of the compositions as defined in Tables 1 and 2 were added inside a 1L bottle from the lowest to highest equilibrium pressure. Therefore, the ingredients were added in the following filling order: R-125, R-41, ethylene (if present), and CO₂. With the help of a scale, the amount of the ingredients to be added was controlled. Particularly, the accuracy of the scale was 0.001 kg. The exact amount of each ingredient added in the bottle was the weight difference between the bottle before adding the product and after its addition. Whenever an ingredient was added, the bottle was shaken to ensure that the ingredients were dissolved homogeneously.

### B. Preparation process of composition of Example 4

A 5L bottle was filed with 2.60kg (5L*0.52 kg/L = 2.60 kg) of the mixture of R-125, R-41, ethylene, and CO₂, based on the % by weight amount disclosed in table 1 (R-125 (17%), R-41 (5.4%), ethylene (0.6%), and CO₂ (77%)):
1. R-125 = 0.17*2.60 = 0.442 kg
2. R-41 = 0.054*2.60 = 0.140 kg
3. ethylene = 0.006*2.60 = 0.016 kg
5. CO₂ = 0.77*2.60 = 2.002 kg

Each one of the mass amounts of the above-mentioned ingredients in the above-fixed order was added inside the bottle.

### Composition Characterization

The COP, glide (°C), P1, P2, and GWP values and the flammability of the refrigerant compositions of the present invention of Ex. 1-6 is shown in the table below:

**Table 3**

| **Example N°** | **COP** | **Glide (°C)** | **P1 (kPa)** | **P2 (kPa)** | **GWP** | **Flammability** |
|---|---|---|---|---|---|---|
| **R-23** | 4.29 | 0.0 | 113.7 | 1007.4 | 14800 | No |
| **Example 1** | 4.00 | 2.6 | 130.2 | 1333.7 | 359 | No |
| **Example 2** | 3.94 | 3.9 | 130.1 | 1365.7 | 392 | No |
| **Example 3** | 3.61 | 7.4 | 102.9 | 1316.4 | 742 | No |
| **Example 4** | 3.74 | 5.9 | 113.6 | 1336.8 | 602 | No |
| **Example 5** | 3.82 | 4.5 | 114.2 | 1302.8 | 569 | No |
| **Example 6** | 3.72 | 5.5 | 106.3 | 1286.5 | 674 | No |

P1 is the pressure of the refrigerant at the evaporator outlet, P2 is the pressure of the refrigerant at the condenser outlet. Glide value is the difference between the dew point temperature and the bubble point temperature at a pressure of 100 kPa absolute.

Taking into account that the P1 value is above 100 kPa, it is expected that none of the compositions undergoes inverse sublimation. Furthermore, all the compositions are compatible with polyol ester (POE).

The flammability of the comparative refrigerant compositions 1-6 is shown in the table below:

**Table 4**

| **Comp. Ex. N°** | **Comp. Ex. 1** | **Comp. Ex. 2** | **Comp. Ex. 3** | **Comp. Ex. 4** | **Comp. Ex. 5** | **Comp. Ex. 6** |
|---|---|---|---|---|---|---|
| **Flamability** | Yes | Yes | Yes | No | No | Yes |

Despite of the fact that the comparative compositions 4 and 5 were not flammable, it was experimentally found that both underwent inverse sublimation making them useless as refrigerants.

In conclusion, only the compositions of the present invention are non-toxic, non-flammable do not undergo inverse sublimation, and have the appropriate coefficient of performance without compromising the GWP value for being used at industrial scale as refrigerant in refrigerant systems, particularly as a R-23 replacement refrigerant composition.

### Citation List

- REFPROP software version 10.0 available by the National Institute of Standards (NIST) on June 4th, 2018
- Regulation (EU) No 517/2014 of the European parliament and of the Council of 16 April 2014
- ASHRAE standard 34/15

## Claims

1. A composition comprising:
a) from 8 to 30% by weight of 1,1,1,2,2-pentafluoroethane (R-125),
b) fluoromethane (R-41) in an amount equal to or lower than about 10% by weight, and
c) from 70 to 85% by weight of carbon dioxide,
being the sum of all the components of the composition of 100% by weight.

2. The composition according to claim 1, which comprises:
a) from 9 to 28% by weight of 1,1,1,2,2-pentafluoroethane (R-125),
b) fluoromethane (R-41) in an amount equal to or lower than about 7% by weight, and
c) from 72 to 84% by weight of carbon dioxide,
being the sum of all the components of the composition of 100% by weight.

3. The composition according to claim 1, which comprises:
a) from 9 to 28% by weight of 1,1,1,2,2-pentafluoroethane (R-125),
b) from 0.5 to 10% by weight of fluoromethane (R-41), and
c) from 72 to 84% by weight of carbon dioxide,
being the sum of all the components of the composition of 100% by weight.

4. The composition according to claim 1, which comprises:
a) from 10 to 25% by weight of 1,1,1,2,2-pentafluoroethane (R-125),
b) from 0.5 to 7% by weight of fluoromethane (R-41), and
c) from 73 to 83% by weight of carbon dioxide,
being the sum of all the components of the composition of 100% by weight.

5. The composition according to any of the claims 1-4, which further comprises from 0.1 to 2% by weight one or more additional refrigerant gases.

6. The composition according to claim 5, wherein the one or more additional refrigeration gases comprise one or more (C₂-C₆)alkanes, particularly wherein the (C₂-C₆)alkanes are selected from the group consisting of ethane, propane, n-butane, isobutane, 3-methylpentane, n-pentane or isopentane.

7. The composition according to claim 5, wherein the one or more additional refrigeration gases comprise one or more (C₂-C₆)alkenes, particularly wherein the (C₂-C₆)alkenes selected from the group consisting of ethylene, propylene, n-butene, isobutene, 1-pentene, cis-2-pentene, and trans-2-pentene and mixtures thereof.

8. The composition according to claim 1, which consists of:
a) about 10% by weight of 1,1,1,2,2-pentafluoroethane (R-125),
b) about 7% by weight of fluoromethane (R-41), and
c) about 83% by weight of carbon dioxide;
or alternatively which consists of:
a) about 16% by weight of 1,1,1,2,2-pentafluoroethane (R-125),
b) about 7% by weight of fluoromethane (R-41), and
c) about 77% by weight of carbon dioxide;
or alternatively which consists of:
a) about 19% by weight of 1,1,1,2,2-pentafluoroethane (R-125),
b) about 7% by weight of fluoromethane (R-41), and
c) about 74% by weight of carbon dioxide.

9. The composition according to claim 1, which consists of:
a) about 11% by weight of 1,1,1,2,2-pentafluoroethane (R-125),
b) about 5.4% by weight of fluoromethane (R-41), and
c) about 83% by weight of carbon dioxide,
d) about 0.6% by weight of ethylene (R-1150);
or alternatively which consists of:
a) about 21% by weight of 1,1,1,2,2-pentafluoroethane (R-125),
b) about 5.4% by weight of fluoromethane (R-41), and
c) about 73% by weight of carbon dioxide,
d) about 0.6% by weight of ethylene (R-1150):
or alternatively which consists of:
a) about 17% by weight of 1,1,1,2,2-pentafluoroethane (R-125),
b) about 5.4% by weight of fluoromethane (R-41), and
c) about 77% by weight of carbon dioxide,
d) about 0.6% by weight of ethylene (R-1150);
or alternatively which consists of:
a) about 25% by weight of 1,1,1,2,2-pentafluoroethane (R-125),
b) about 0.5% by weight of fluoromethane (R-41), and
c) about 74% by weight of carbon dioxide,
d) about 0.5% by weight of ethylene (R-1150);
or alternatively which consists of:
a) about 20% by weight of 1,1,1,2,2-pentafluoroethane (R-125),
b) about 0.5% by weight of fluoromethane (R-41), and
c) about 79% by weight of carbon dioxide,
d) about 0.5% by weight of ethylene (R-1150).

10. The composition according to any of the claims 1-9, having a value of the coefficient of performance of at least about 70% of the value of the coefficient of performance of the trifluoromethane (R-23).

11. The composition according to any of the claims 1-10, further comprising an oil lubricant; particularly selected from the group consisting of a mineral oil lubricant, mineral oil, polyol ester (POE), polyalphaolefin, polyalkylene glycol oil, alkylbenzene and mixtures thereof.

12. Use of the composition as defined in any of the claims 1-11, as a refrigerant; particularly, a non-flammable refrigerant.

13. A refrigerant system comprising the composition as defined in any of the claims 1-11.

14. The refrigerant system according to claim 13, which is selected from the group consisting of cold room, continuous or discontinuous cold tunnel, air conditioning, chiller, and liquid immersion freezing.

15. A refrigeration process for decreasing the temperature of an article comprising using the system as defined in any of the claims 13 or 14.

## Patentansprüche

1. Eine Zusammensetzung umfassend:
a) von 8 bis 30 Gew.- % 1,1,1,2,2-Pentafluorethan (R-125),
b) Fluormethan (R-41) in einer Menge von gleich oder weniger als etwa 10 Gew.- %, und
c) von 70 bis 85 Gew.- % Kohlendioxid,
wobei die Summe aller Komponenten der Zusammensetzung 100 Gew.- % beträgt.

2. Die Zusammensetzung nach Anspruch 1, welche Folgendes umfasst:
a) von 9 bis 28 Gew.- % 1,1,1,2,2-Pentafluorethan (R-125),
b) Fluormethan (R-41) in einer Menge von gleich oder weniger als etwa 7 Gew.- %, und
c) von 72 bis 84 Gew.- % Kohlendioxid,
wobei die Summe aller Komponenten der Zusammensetzung 100 Gew.- % beträgt.

3. Die Zusammensetzung nach Anspruch 1, welche Folgendes umfasst:
a) von 9 bis 28 Gew.- % 1,1,1,2,2-Pentafluorethan (R-125),
b) von 0,5 bis 10 Gew.- % Fluormethan (R-41) und
c) von 72 bis 84 Gew.- % Kohlendioxid,
wobei die Summe aller Komponenten der Zusammensetzung 100 Gew.- % beträgt.

4. Die Zusammensetzung nach Anspruch 1, welche Folgendes umfasst:
a) von 10 bis 25 Gew.- % 1,1,1,2,2-Pentafluorethan (R-125),
b) von 0,5 bis 7 Gew.- % Fluormethan (R-41) und
c) von 73 bis 83 Gew.- % Kohlendioxid,
wobei die Summe aller Komponenten der Zusammensetzung 100 Gew.- % beträgt.

5. Die Zusammensetzung nach einem der Ansprüche 1-4, welche ferner von 0,1 bis 2 Gew.- % eines oder mehrerer zusätzlicher Kältemittelgase umfasst.

6. Die Zusammensetzung nach Anspruch 5, wobei das eine oder die mehreren zusätzlichen Kühlgase ein oder mehrere (C₂-C₆)Alkane umfassen, insbesondere wobei die (C₂-C₆)Alkane ausgewählt sind aus der Gruppe bestehend aus Ethan, Propan, n-Butan, Isobutan, 3-Methylpentan, n-Pentan oder Isopentan.

7. Die Zusammensetzung nach Anspruch 5, wobei das eine oder die mehreren zusätzlichen Kühlgase ein oder mehrere (C₂-C₆)Alkene umfassen, insbesondere wobei die (C₂-C₆)Alkene ausgewählt sind aus der Gruppe bestehend aus Ethylen, Propylen, n-Buten, Isobuten, 1-Penten, cis-2-Penten und trans-2-Penten und Mischungen davon.

8. Die Zusammensetzung nach Anspruch 1, welche aus Folgendem besteht:
a) etwa 10 Gew.- % 1,1,1,2,2-Pentafluorethan (R-125),
b) etwa 7 Gew.- % Fluormethan (R-41) und
c) etwa 83 Gew.- % Kohlendioxid;
oder welche alternativ aus Folgendem besteht:
a) etwa 16 Gew.- % 1,1,1,2,2-Pentafluorethan (R-125),
b) etwa 7 Gew.- % Fluormethan (R-41) und
c) etwa 77 Gew.- % Kohlendioxid;
oder welche alternativ aus Folgendem besteht:
a) etwa 19 Gew.- % 1,1,1,2,2-Pentafluorethan (R-125),
b) etwa 7 Gew.- % Fluormethan (R-41) und
c) etwa 74 Gew.- % Kohlendioxid.

9. Die Zusammensetzung nach Anspruch 1, welche aus Folgendem besteht:
a) etwa 11 Gew.- % 1,1,1,2,2-Pentafluorethan (R-125),
b) etwa 5,4 Gew.- % Fluormethan (R-41) und
c) etwa 83 Gew.- % Kohlendioxid,
d) etwa 0,6 Gew.- % Ethylen (R-1150);
oder welche alternativ aus Folgendem besteht:
a) etwa 21 Gew.- % 1,1,1,2,2-Pentafluorethan (R-125),
b) etwa 5,4 Gew.- % Fluormethan (R-41) und
c) etwa 73 Gew.- % Kohlendioxid,
d) etwa 0,6 Gew.- % Ethylen (R-1150):
oder welche alternativ aus Folgendem besteht:
a) etwa 17 Gew.- % 1,1,1,2,2-Pentafluorethan (R-125),
b) etwa 5,4 Gew.- % Fluormethan (R-41) und
c) etwa 77 Gew.- % Kohlendioxid,
d) etwa 0,6 Gew.- % Ethylen (R-1150);
oder welche alternativ aus Folgendem besteht:
a) etwa 25 Gew.- % 1,1,1,2,2-Pentafluorethan (R-125),
b) etwa 0,5 Gew.- % Fluormethan (R-41) und
c) etwa 74 Gew.- % Kohlendioxid,
d) etwa 0,5 Gew.- % Ethylen (R-1150);
oder welche alternativ aus Folgendem besteht:
a) etwa 20 Gew.- % 1,1,1,2,2-Pentafluorethan (R-125),
b) etwa 0,5 Gew.- % Fluormethan (R-41) und
c) etwa 79 Gew.- % Kohlendioxid,
d) etwa 0,5 Gew.- % Ethylen (R-1150).

10. Die Zusammensetzung nach einem der Ansprüche 1 bis 9, die einen Wert des Leistungskoeffizienten von mindestens etwa 70 % des Wertes des Leistungskoeffizienten des Trifluormethans (R-23) hat.

11. Die Zusammensetzung nach einem der Ansprüche 1 bis 10, ferner umfassend ein Ölschmiermittel; insbesondere ausgewählt aus der Gruppe bestehend aus einem Mineralölschmiermittel, Mineralöl, Polyolester (POE), Polyalphaolefin, Polyalkylenglykolöl, Alkylbenzol und Mischungen davon.

12. Verwendung der Zusammensetzung wie in einem der Ansprüche 1 bis 11 definiert, als ein Kältemittel; insbesondere ein nicht brennbares Kältemittel.

13. Ein Kältemittelsystem, das die Zusammensetzung wie in einem der Ansprüche 1 bis 11 definiert umfasst.

14. Das Kältemittelsystem nach Anspruch 13, welches ausgewählt ist aus der Gruppe bestehend aus einem Kühlraum, einem kontinuierlichen oder diskontinuierlichen Kühltunnel, einer Klimaanlage, einem Kühler und Flüssigkeitstauchgefrieren.

15. Ein Kühlverfahren zur Senkung der Temperatur eines Artikels, umfassend die Verwendung des Systems wie in einem der Ansprüche 13 oder 14 definiert.

## Revendications

1. Une composition comprenant :
a) de 8 à 30 % en poids de 1,1,1,2,2-pentafluoroéthane (R-125),
b) du fluorométhane (R-41) en une quantité égale ou inférieure à environ 10 % en poids, et
c) de 70 à 85 % en poids de dioxyde de carbone,
étant la somme de tous les composants de la composition de 100 % en poids.

2. La composition selon la revendication 1, qui comprend :
a) de 9 à 28 % en poids de 1,1,1,2,2-pentafluoroéthane (R-125),
b) du fluorométhane (R-41) en une quantité égale ou inférieure à environ 7 % en poids, et
c) de 72 à 84 % en poids de dioxyde de carbone,
étant la somme de tous les composants de la composition de 100 % en poids.

3. La composition selon la revendication 1, qui comprend :
a) de 9 à 28 % en poids de 1,1,1,2,2-pentafluoroéthane (R-125),
b) de 0,5 à 10 % en poids de fluorométhane (R-41), et
c) de 72 à 84 % en poids de dioxyde de carbone,
étant la somme de tous les composants de la composition de 100 % en poids.

4. La composition selon la revendication 1, qui comprend :
a) de 10 à 25 % en poids de 1,1,1,2,2-pentafluoroéthane (R-125),
b) de 0,5 à 7 % en poids de fluorométhane (R-41), et
c) de 73 à 83 % en poids de dioxyde de carbone,
étant la somme de tous les composants de la composition de 100 % en poids.

5. La composition selon l'une quelconque des revendications 1 à 4, qui comprend en outre de 0,1 à 2 % en poids d'un ou plusieurs gaz de réfrigération supplémentaires.

6. La composition selon la revendication 5, dans laquelle le un ou les plusieurs gaz de réfrigération supplémentaires comprennent un ou plusieurs alcanes en (C₂-C₆), en particulier dans laquelle les alcanes en (C₂-C₆) sont choisis dans le groupe constitué de l'éthane, le propane, le n-butane, l'isobutane, le 3-méthylpentane, le n-pentane ou l'isopentane.

7. La composition selon la revendication 5, dans laquelle le un ou les plusieurs gaz de réfrigération supplémentaires comprennent un ou plusieurs alcènes en (C₂-C₆), en particulier dans laquelle les alcènes en (C₂-C₆) sont choisis dans le groupe constitué par l'éthylène, le propylène, le n-butène, l'isobutène, le 1-pentène, le cis-2-pentène et le trans-2-pentène et des mélanges de ceux-ci.

8. La composition selon la revendication 1, qui consiste en :
a) environ 10 % en poids de 1,1,1,2,2-pentafluoroéthane (R-125),
b) environ 7 % en poids de fluorométhane (R-41), et
c) environ 83 % en poids de dioxyde de carbone ;
ou alternativement qui consiste en :
a) environ 16 % en poids de 1,1,1,2,2-pentafluoroéthane (R-125),
b) environ 7 % en poids de fluorométhane (R-41), et
c) environ 77 % en poids de dioxyde de carbone ;
ou alternativement qui consiste en :
a) environ 19 % en poids de 1,1,1,2,2-pentafluoroéthane (R-125),
b) environ 7 % en poids de fluorométhane (R-41), et
c) environ 74 % en poids de dioxyde de carbone.

9. La composition selon la revendication 1, qui consiste en :
a) environ 11 % en poids de 1,1,1,2,2-pentafluoroéthane (R-125),
b) environ 5,4 % en poids de fluorométhane (R-41), et
c) environ 83 % en poids de dioxyde de carbone,
d) environ 0,6 % en poids d'éthylène (R-1150) ;
ou alternativement qui consiste en :
a) environ 21 % en poids de 1,1,1,2,2-pentafluoroéthane (R-125),
b) environ 5,4 % en poids de fluorométhane (R-41), et
c) environ 73 % en poids de dioxyde de carbone,
d) environ 0,6 % en poids d'éthylène (R-1150) :
ou alternativement qui consiste en :
a) environ 17 % en poids de 1,1,1,2,2-pentafluoroéthane (R-125),
b) environ 5,4 % en poids de fluorométhane (R-41), et
c) environ 77 % en poids de dioxyde de carbone,
d) environ 0,6 % en poids d'éthylène (R-1150) ;
ou alternativement qui consiste en :
a) environ 25 % en poids de 1,1,1,2,2-pentafluoroéthane (R-125),
b) environ 0,5 % en poids de fluorométhane (R-41), et
c) environ 74 % en poids de dioxyde de carbone,
d) environ 0,5 % en poids d'éthylène (R-1150) ;
ou alternativement qui consiste en :
a) environ 20 % en poids de 1,1,1,2,2-pentafluoroéthane (R-125),
b) environ 0,5 % en poids de fluorométhane (R-41), et
c) environ 79 % en poids de dioxyde de carbone,
d) environ 0,5 % en poids d'éthylène (R-1150).

10. La composition selon l'une quelconque des revendications 1 à 9, ayant une valeur du coefficient de performance d'au moins environ 70 % de la valeur du coefficient de performance du trifluorométhane (R-23).

11. La composition selon l'une quelconque des revendications 1 à 10, comprenant en outre un lubrifiant à base d'huile ; en particulier choisi dans le groupe constitué par un lubrifiant à base d'huile minérale, une huile minérale, un ester de polyol (POE), une polyalphaoléfine, une huile de polyalkylène glycol, un alkylbenzène et des mélanges de ceux-ci.

12. Utilisation de la composition telle que définie dans l'une quelconque des revendications 1 à 11, en tant que réfrigérant ; en particulier, un réfrigérant ininflammable.

13. Un système réfrigérant comprenant la composition telle que définie dans l'une quelconque des revendications 1 à 11.

14. Le système réfrigérant selon la revendication 13, qui est choisi dans le groupe constitué par une chambre froide, un tunnel froid continu ou discontinu, la climatisation, un refroidisseur et la congélation par immersion dans un liquide.

15. Un procédé de réfrigération pour diminuer la température d'un article comprenant l'utilisation du système tel que défini dans l'une quelconque des revendications 13 ou 14.
